# FASCICULE DE BREVET EUROPEEN

(11) **EP 0 884 505 B1**
(45) Date de publication et mention de la délivrance du brevet: **02.04.2003**
(21) Numéro de dépôt: 98401343.3
(22) Date de dépôt: 05.06.1998
(51) Int. Cl.: F16K 1/16

(54) **Dispositif de transmission de mouvements à levier pivotant et vanne incorporant un tel dispositif**
Vorrichtung mit einem drehbaren Hebel zur Bewegungsübertragung und Ventil mit einer solchen Vorrichtung
Device with pivotable lever for transmission of movement and valve incorporating such a device

(30) Priorité: 09.06.1997 FR 9707114
(43) Date de publication de la demande: 16.12.1998
(73) Titulaire: AEROSPATIALE MATRA, 75016 Paris (FR)
(72) Inventeur: Ouvrard, Michel, 78300 Poissy (FR); Tallend, Claude, 78200 Boinvilliers (FR)
(74) Mandataire: Poulin, Gérard

(56) Documents cités:
- EP-A- 0 725 245
- DE-B- 1 206 685
- FR-A- 2 324 967
- FR-A- 2 550 602
- US-A- 4 285 497
- US-A- 4 630 641

## Description

### Domaine technique

L'invention concerne un dispositif conçu pour assurer la transmission de mouvements entre deux organes aptes à être animés de mouvements de va-et-vient de faible amplitude selon deux directions coplanaires non alignées.

L'invention concerne également une vanne incorporant un tel dispositif de transmission de mouvements.

L'invention peut être appliquée à tout type de vannes et, de façon plus générale, à tout dispositif de transmission de mouvements utilisant un levier pivotant et mettant en jeu des mouvements de faible amplitude, en particulier lorsqu'on recherche des efforts résistants les plus faibles possible, reproductibles et sans hystérésis, ainsi qu'une raideur et une résistance importantes selon l'axe du levier.

### Etat de la technique

Dans une première catégorie de vannes existantes, les déplacements du clapet d'étanchéité de la vanne sont pilotés par un actionneur linéaire placé dans l'axe de ce clapet. Plus précisément, le clapet d'étanchéité est alors porté directement par la tige de commande de l'actionneur.

Les vannes de ce type ont pour avantages d'être particulièrement simples et peu coûteuses. Elles présentent toutefois quelques inconvénients. Le premier d'entre eux concerne la présence inévitable de frottements, qui se traduit par des efforts résistants non négligeables, variables dans le temps, et par la présence d'hystérésis. De plus, les parties fluidique et électrique sont nécessairement juxtaposées, ce qui peut être la source de problèmes en cas de fuite.

Dans une autre catégorie de vannes existantes, le pilotage du clapet d'étanchéité est assuré par un moteur couple, au travers d'un levier pivotant portant le clapet à l'une de ses extrémités.

Les vannes de ce type ont pour avantages de présenter un frottement moindre et d'assurer une séparation complète des parties fluidique et électrique. Toutefois, elles sont sensiblement plus complexes et plus coûteuses, notamment du fait de l'utilisation d'un moteur couple.

Dans le cas des vannes de type 51-127 commercialisées par la Société MOOG, qui appartiennent à la catégorie des vannes à levier pivotant et à moteur couple, le pivotement du levier est obtenu en montant celui-ci dans le corps de la vanne par l'intermédiaire d'un fourreau déformable.

Cet agencement permet de supprimer totalement les frottements. Toutefois, l'utilisation d'un fourreau déformable pour assurer le pivotement du levier a pour inconvénient notable que les efforts résistants sont les mêmes dans toutes les directions perpendiculaires au levier. Par conséquent, si l'on désire assurer un maintien efficace du levier selon son axe de pivotement (lorsque la vanne est soumise à des efforts externes dans cette direction), il est nécessaire de donner au fourreau une raideur et une résistance importantes. Cela se traduit alors inévitablement par des efforts résistants importants dans le sens du pivotement. La puissance requise pour l'actionneur est donc relativement élevée, de même que les temps de réponse de la vanne.

Dans le dispositif selon le document FR-A-2 324 967, le pivotement du levier est obtenu en montant celui-ci dans le corps par l'intermédiaire d'une pièce métallique montée de construction relativement complexe.

### Exposé de l'invention

L'invention a principalement pour objet un dispositif de transmission de mouvements entre deux organes, du type à levier pivotant, dont la conception originale lui permet de ne présenter aucun frottement (et donc pas d'hystérésis et une bonne reproductibilité) et de limiter la puissance requise pour la commande du mouvement, tout en ayant des temps de réponse très courts.

Conformément à l'invention ce résultat est obtenu au moyen d'un dispositif de transmission de mouvements entre deux organes aptes à être animés de mouvements de va-et-vient de faible amplitude selon deux directions coplanaires non alignées, ledit dispositif comprenant :
- un corps fixe ;
- un levier mobile reliant les deux organes ;
- une lame flexible interposée entre le levier et le corps fixe et située, dans un état non contraint, dans un plan perpendiculaire au plan contenant lesdites directions et passant par un axe longitudinal du levier .

L'utilisation d'une lame flexible d'orientation adaptée permet au dispositif de ne présenter aucun frottement, autorise des efforts résistants les plus faibles possible, reproductibles et sans hystérésis dans le sens du pivotement, tout en présentant une raideur et une résistance importantes selon l'axe du pivotement.

Dans la forme de réalisation préférée de l'invention, la lame flexible relie le levier à des parties du corps fixe situées de part et d'autre du levier.

Avantageusement, la lame flexible peut alors être montée dans une partie tubulaire du corps fixe, selon deux génératrices diamétralement opposées. Dans ce cas, le levier traverse la partie tubulaire selon son axe, lorsque la lame est dans son état non contraint.

Afin d'accroître la raideur dans le sens de l'axe de pivotement, la lame flexible est de préférence fixée au levier et au corps fixe.

L'invention a aussi pour objet une vanne, comprenant :
- un corps fixe dans lequel est formé au moins un siège de vanne ;
- au moins un levier mobile dont une partie centrale est montée sur le corps fixe par l'intermédiaire d'une lame flexible ayant une forme plane et passant par un axe longitudinal du levier, dans un état non contraint ;
- un actionneur linéaire, équipé d'un organe de commande coopérant avec une première extrémité du levier et apte à être animé d'un mouvement de va-et-vient de faible amplitude, selon une direction située dans un plan perpendiculaire au plan de la lame flexible ;
- un clapet monté à une deuxième extrémité du levier, de façon à être en appui contre le siège lorsque la lame flexible est dans son état non contraint.

Une vanne ainsi réalisée présente tous les avantages déjà mentionnés, qui découlent de l'utilisation du dispositif de transmission de mouvements défini précédemment. De plus, l'utilisation d'un actionneur linéaire permet de simplifier la vanne et d'en réduire le coût, par rapport aux vannes à levier pivotant de l'art antérieur. Le recours à la technique du levier pivotant procure, par ailleurs, les avantages liés à l'utilisation de cette technique, qui sont la séparation complète des parties fluidiques et électriques et, dans ce cas, l'absence de tout frottement.

Dans la forme de réalisation préférée de l'invention, selon laquelle la lame flexible est montée dans une partie tubulaire du corps fixe, la deuxième extrémité du levier est située dans une chambre formée à l'intérieur du corps fixe et partiellement délimitée par un soufflet d'étanchéité interposé entre le levier et cette partie tubulaire.

L'organe de commande comprend avantageusement un poussoir et des moyens élastiques agissant en opposition sur la première extrémité du levier, de telle sorte que les moyens élastiques maintiennent le clapet en appui contre le siège et que le poussoir est séparé de la première extrémité du levier par un jeu fonctionnel lorsque l'actionneur linéaire occupe un état de fermeture de la vanne. Du fait que les moyens élastiques font partie de l'équipage mobile de la vanne, ils n'interviennent pas dans le bilan des efforts à vaincre par l'actionneur lors de la commande d'ouverture de la vanne, ce qui contribue à limiter la puissance requise pour l'actionneur, ainsi que les temps de réponse.

Il est à noter que cet agencement peut être utilisé pour commander simultanément plusieurs leviers avec un seul actionneur (vanne contrôlant simultanément le débit de plusieurs fluides).

### Brève description des dessins

On décrira à présent, à titre d'exemple non limitatif, une forme de réalisation préférée de l'invention, en se référant aux dessins annexés, dans lesquels :
- la figure 1 est une vue en coupe longitudinale d'une vanne réalisée conformément à l'invention, représentée dans sa position fermée ;
- la figure 2 est une vue en coupe selon la ligne II-II de la figure 1 ; et
- la figure 3 est une vue analogue à la figure 1, illustrant la vanne dans sa position ouverte.

### Exposé détaillé d'une forme de réalisation préférée

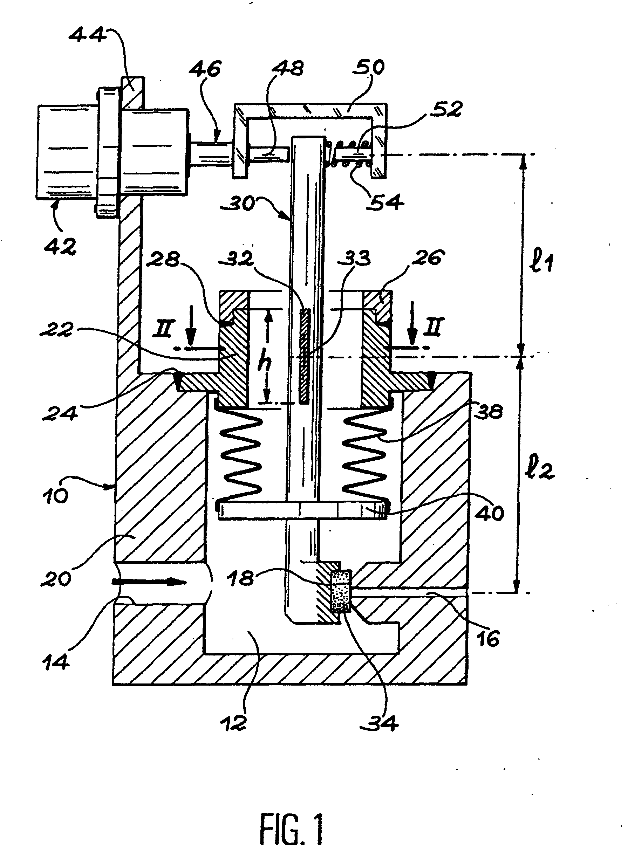

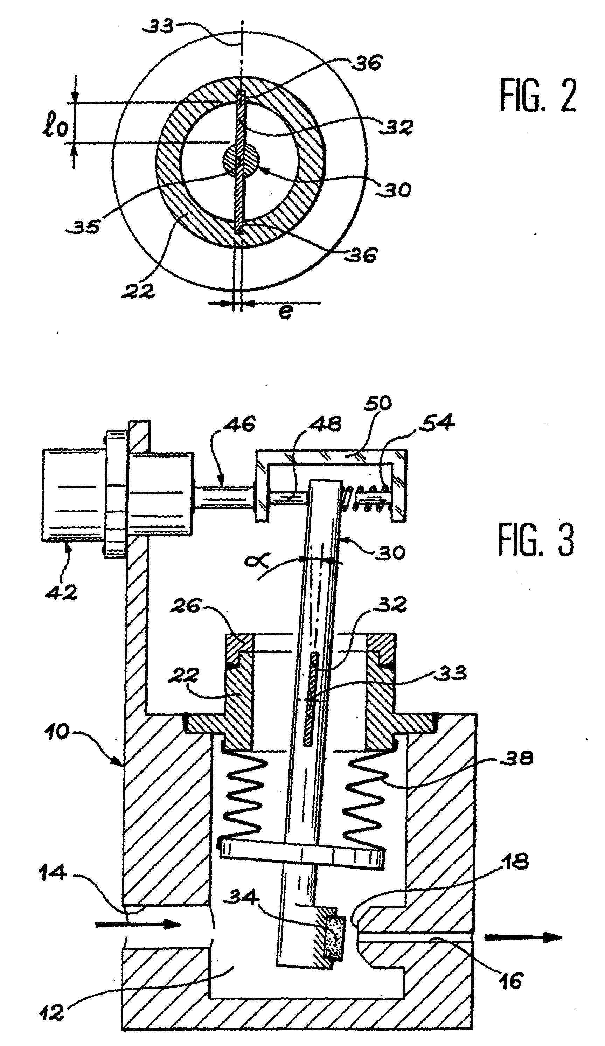

Les figures 1 et 3 représentent, respectivement dans ses états fermé et ouvert, une vanne conforme à l'invention. Cette vanne incorpore un dispositif de transmission de mouvements susceptible d'être utilisé dans d'autres systèmes mécaniques, afin de transmettre des mouvements entre deux organes quelconques animés de mouvements de va-et-vient de faible amplitude selon deux directions coplanaires non alignées.

La vanne représentée sur les figures comprend un corps fixe 10 à l'intérieur duquel est formée une chambre 12. Un passage 14 d'entrée de fluide est pratiqué dans le corps 10, de façon à déboucher directement dans la chambre 12. Le corps 10 de la vanne est également traversé par un passage 16 de sortie de fluide, qui débouche dans la chambre 12 au travers d'un siège 18 de vanne.

Comme l'illustrent notamment les figures 1 et 3, le corps 10 de la vanne comprend une partie principale 20, dans laquelle sont formés les passages 14 et 16 ainsi que la chambre 12. Celle-ci présente dans ce cas une géométrie sensiblement cylindrique et les passages 14 et 16 y débouchent radialement.

Le corps 10 de la vanne comprend également une partie tubulaire 22, placée à l'une des extrémité de la chambre 12 et fixée à la partie principale 20 par exemple par une soudure 24. La partie tubulaire 22 est coiffée, sur sa face extérieure, par un chapeau 26 en forme de bague, dont la fonction apparaîtra par la suite. Ce chapeau 26 est fixé sur la partie tubulaire 22 par une soudure 28.

La partie tubulaire 22 du corps 10 supporte selon son axe un levier mobile 30, par l'intermédiaire d'une lame flexible 32, de façon à permettre un pivotement du levier, d'amplitude limitée, autour d'un axe fictif 33, perpendiculaire à l'axe longitudinal du levier.

Dans la forme de réalisation représentée, le levier mobile 30 se présente sous la forme d'une tige cylindrique généralement rectiligne, qui traverse avec un jeu relativement important la partie tubulaire 22 ainsi que le chapeau 26 du corps 10. Lorsque la lame flexible 32 est dans son état plan non contraint, illustré sur les figures 1 et 2, le levier 30 est coaxial à la partie tubulaire 12 et au chapeau 26, et le plan de la lame est perpendiculaire à l'axe du siège 18 de la vanne.

A son extrémité située à l'intérieur de la chambre 12, le levier mobile 30 porte un clapet d'étanchéité 34. Plus précisément, le clapet d'étanchéité 34 est monté latéralement sur le levier 30, du côté du siège 18, de telle sorte que la face en contact avec le siège en position fermée soit parallèle à l'axe longitudinal du levier 30. Ainsi, le clapet 34 est normalement en appui étanche contre le siège 18 lorsque la lame flexible 32 occupe son état non contraint illustré sur la figure 1.

Comme l'illustrent en particulier les figures 1 et 2, la lame flexible 32 est une lame rectangulaire, qui traverse sans jeu une fente 35 formée selon l'axe longitudinal de la tige formant le levier mobile 30. Les extrémités de la lame flexible 32 les plus éloignées du levier mobile 30 sont reçues sans jeu dans des rainures 36 pratiquées dans la surface intérieure cylindrique de la partie tubulaire 22 du corps 10, en des emplacements diamétralement opposés par rapport au levier 30.

Afin de donner au dispositif de transmission de mouvements ainsi constitué une raideur importante selon une direction perpendiculaire au plan de la lame flexible 32, celle-ci est fixée rigidement au levier 30 ainsi qu'à la partie tubulaire 22, de part et d'autre du levier, par exemple par des soudures (non représentées).

Dans la forme de réalisation illustrée sur les figures, le chapeau 26 permet de maintenir la lame flexible 32 dans les rainures 36, avant que la lame ne soit fixée sur la partie tubulaire 22.

Afin d'assurer l'étanchéité de la chambre 12 vis-à-vis de l'extérieur, lors du pivotement du levier 30 autour de son axe fictif 33, on interpose un soufflet d'étanchéité 38 entre ces deux pièces. De façon plus précise, une première extrémité du soufflet 38 est fixée sur la partie tubulaire 22 du corps 10 et son extrémité opposée est fixée sur un flasque 40 qui fait partie intégrante du levier mobile 30. Ce flasque 40 est interposé entre la partie tubulaire 22 et l'extrémité du levier 30 portant le clapet d'étanchéité 34. Le soufflet 38 délimite ainsi partiellement le volume de la chambre 12.

La vanne conforme à l'invention comporte de plus un actionneur linéaire 42, fixé sur le corps 10 de façon à coopérer avec l'extrémité extérieure du levier mobile 30, opposée à celle qui porte le clapet d'étanchéité 34. De façon plus précise, l'actionneur linéaire 42 est monté sur une patte 44 de la partie principale 20 du corps 10, de telle sorte que son organe de commande 46 se déplace selon une direction perpendiculaire à l'axe du levier mobile 30, lorsque la vanne est dans son état fermé illustré sur la figure 1.

L'actionneur linéaire 42 peut notamment être constitué par un actionneur électromagnétique de type connu.

Comme l'illustrent en particulier les figures 1 et 3, l'organe de commande 46 de l'actionneur linéaire 42 comprend un poussoir 48 susceptible de venir en appui latéralement sur l'extrémité extérieure du levier 30, du côté opposé à celui qui porte le clapet 34. Plus précisément lorsque l'actionneur linéaire 42 occupe un état de fermeture de la vanne illustré sur la figure 1, qui correspond à l'état non contraint de la lame flexible 32, un léger jeu fonctionnel existe entre l'extrémité du poussoir 48 et le levier 30. En revanche et comme l'illustre la figure 3, lorsque l'actionneur linéaire 42 passe dans son état correspondant à l'ouverture de la vanne, le poussoir 48 rattrape le jeu fonctionnel précité et vient en appui contre l'extrémité extérieure du levier 30, pour faire pivoter celui-ci autour de son axe fictif 33, par torsion de la lame 32, de façon à éloigner le clapet 34 du siège 18.

L'organe de commande 46 de l'actionneur linéaire 42 comprend également un étrier 50 qui chevauche l'extrémité correspondante du levier 30. Du côté opposé au poussoir 48 par rapport au levier 30, cet étrier 50 comporte un pion de centrage 52, coaxial au poussoir et sur lequel est monté un ressort de compression 54. Plus précisément, le ressort de compression 54 est interposé entre le levier 30 et l'étrier 50, du même côté que le clapet 34.

Lorsque l'actionneur linéaire 42 occupe l'état de fermeture de la vanne illustré sur la figure 1, le ressort de compression 54 applique sur le levier 30 un effort additionnel assurant le maintien de la vanne en position fermée, ce qui garantit l'étanchéité.

Lorsque l'actionneur linéaire 42 est mis en oeuvre pour commander l'ouverture de la vanne (figure 3), le ressort de compression 54 n'intervient pas dans le bilan des efforts à vaincre par l'actionneur, puisqu'il fait partie de l'organe de commande 46. On garantit ainsi l'étanchéité de la vanne en position fermée, sans pour autant accroître la puissance requise pour commander l'ouverture de la vanne.

Dans la vanne qui vient d'être décrite, la lame flexible 32 permet d'obtenir le meilleur compromis possible entre une bonne résistance aux efforts externes orientés selon l'axe fictif 33 et aux efforts selon l'axe du levier (dus à la pression interne de la vanne agissant sur le soufflet) et une faible résistance au pivotement du levier 30 autour de cet axe. Il est à noter que l'épaisseur de la lame 32 peut être constante, comme on l'a illustré sur les figures, ou évolutive pour tenir compte des caractéristiques que l'on désire donner au système.

De façon générale, l'obtention de performances optimales (puissance électrique et temps de réponse les plus faibles possible) est conditionnée par l'optimisation de paramètres géométriques du dispositif de transmission de mouvements constitué par le levier 30 monté sur la lame flexible 32.

Ainsi, le rapport des bras de levier extérieur ℓ1 et intérieur ℓ2 du levier mobile 30, de part et d'autre de son axe d'articulation fictif 33, est optimisé afin d'obtenir le meilleur compromis entre l'effort à vaincre par l'actionneur 42 et la levée du clapet 34. En général, on choisit la levée minimale du clapet, de telle sorte que les pertes de charge au voisinage du siège soient acceptables, ce qui fixe le rapport entre l'angle de pivotement α du levier 30 lors de l'ouverture de la vanne (figure 2) et le bras de levier intérieur ℓ2 du levier 30. On donne ensuite, de préférence, une valeur importante au rapport entre les bras de levier extérieur ℓ1 et intérieur ℓ2, afin de minimiser l'effort à vaincre par l'actionneur. Toutefois, cela augmente la course requise pour l'actionneur 42, de sorte qu'un compromis doit être trouvé en fonction de la puissance électrique et du temps de réponse visé.

Par ailleurs, les dimensions géométriques de la lame flexible 32, c'est-à-dire son épaisseur e, sa hauteur h dans le sens de l'axe longitudinal du levier 30 et sa largeur ℓ0 entre le levier 30 et la partie tubulaire 22 (figure 2) sont optimisées. Cette optimisation est faite de façon à réduire jusqu'à des valeurs acceptables le moment de torsion proportionnel à h.e³.α/ℓ0 nécessaire pour amener la lame jusqu'à la position d'ouverture de la vanne illustrée sur la figure 3 (réduction des efforts à vaincre), la contrainte de cisaillement proportionnelle à e.α/ℓ0 dans la lame 32, créée par cette torsion (amélioration de la tenue de la lame) et la contrainte de flexion proportionnelle à ℓ0/(e.h²) dans la lame 32, induite par l'effet de la pression du fluide sur le soufflet 38 (amélioration de la tenue de la lame).

Le meilleur compromis consiste à rendre maximales la hauteur h et la largeur ℓ0 de la lame flexible 32, en tenant compte des contraintes d'encombrement, et à donner à l'épaisseur e de la lame la valeur la plus faible possible acceptable, compte tenu de sa limite de tenue en flexion. En effet, l'épaisseur e de la lame intervient élevée au cube dans le bilan des efforts à vaincre par l'actionneur, de sorte que sa diminution améliore notablement les performances.

Dans la vanne qui vient d'être décrite, le levier mobile 30 et la lame flexible 32 forment un dispositif de transmission de mouvements de faible amplitude, entre l'organe de commande 46 de l'actionneur 42, animé d'un mouvement de va-et-vient selon l'axe du poussoir 48, et le clapet 34, animé d'un mouvement de va-et-vient selon une trajectoire circulaire centrée sur l'axe fictif 33.

Comme on l'a déjà observé, ce dispositif de transmission de mouvements peut être utilisé dans d'autres applications, pour transmettre des mouvements entre deux organes susceptibles d'être animés de mouvements de va-et-vient de faible amplitude selon deux directions coplanaires non alignées. De ce point de vue, il est à noter que si le déplacement du clapet 34 et celui de l'organe de commande 46 s'effectuent selon deux directions sensiblement parallèles dans la vanne décrite, cette caractéristique n'est pas impérative. En effet, on peut donner au levier 30 une forme non rectiligne permettant d'assurer une transmission de mouvements entre deux organes dont les déplacements sont coplanaires mais non parallèles l'un à l'autre.

## Revendications

1. Dispositif de transmission de mouvements entre deux organes (46,34) aptes à être animés de mouvements de va-et-vient de faible amplitude selon deux directions coplanaires non alignées, ledit dispositif comprenant :
- un corps fixe (10) ;
- un levier mobile (30) reliant les deux organes (46,34);
- une lame flexible (32) interposée entre le levier (30) et le corps fixe (10) et située, dans un état non contraint, dans un plan perpendiculaire au plan contenant lesdites directions et passant par un axe longitudinal du levier.

2. Dispositif selon la revendication 1, dans lequel la lame flexible (32) relie le levier (30) à des parties du corps fixe (10) situées de part et d'autre du levier.

3. Dispositif selon la revendication 2, dans lequel la lame flexible (32) est montée dans une partie tubulaire (22) du corps fixe (10), selon deux génératrices diamétralement opposées, le levier (30) traversant cette partie tubulaire selon son axe, lorsque la lame est dans son état non contraint.

4. Dispositif selon l'une quelconque des revendications précédentes, dans lequel la lame flexible (32) est fixée au levier (30) et au corps fixe (10).

5. Vanne, comprenant :
- un corps fixe (10) dans lequel est formé au moins un siège (18) de vanne ;
- au moins un levier mobile (30) dont une partie centrale est montée sur le corps fixe (10) par l'intermédiaire d'une lame flexible (32) ayant une forme plane et passant par un axe longitudinal du levier, dans un état non contraint ;
- un actionneur linéaire (42), équipé d'un organe de commande (46) coopérant avec une première extrémité du levier (30) et apte à être animé d'un mouvement de va-et-vient de faible amplitude, selon une direction située dans un plan perpendiculaire au plan de la lame flexible (32) ;
- un clapet (34) monté à une deuxième extrémité du levier, de façon à être en appui contre le siège (18) lorsque la lame flexible (32) est dans son état non contraint.

6. Vanne selon la revendication 5, dans laquelle la lame flexible (32) relie le levier (30) à des parties du corps fixe (10) situées de part et d'autre du levier.

7. Vanne selon la revendication 6, dans laquelle la lame flexible (32) est montée dans une partie tubulaire (22) du corps fixe (10), selon deux génératrices diamétralement opposées, le levier (30) traversant cette partie tubulaire selon son axe, lorsque la lame est dans son état non contraint.

8. Vanne selon la revendication 7, dans laquelle la deuxième extrémité du levier (30) est située dans une chambre (12) formée à l'intérieur du corps fixe (10) et partiellement délimitée par un soufflet d'étanchéité (38) interposé entre le levier (30) et ladite partie tubulaire (22) du corps fixe (10).

9. Vanne selon la revendication 8, dans laquelle des passages (14,16) d'entrée et de sortie de fluide sont formés dans le corps fixe (10) et débouchent dans ladite chambre (12), respectivement directement et au travers du siège (18).

10. Vanne selon l'une quelconque des revendications 5 à 9, dans laquelle la lame flexible (32) est fixée au levier (30) et au corps fixe (10).

11. Vanne selon l'une quelconque des revendications 5 à 10, dans laquelle l'organe de commande (46) comprend un poussoir (48) et des moyens élastiques (54) agissant en opposition sur la première extrémité du levier (30), de telle sorte que les moyens élastiques (54) maintiennent le clapet (34) en appui contre le siège (18) et que le poussoir (48) est séparé de la première extrémité du levier (30) par un jeu fonctionnel lorsque l'actionneur linéaire (42) occupe un état de fermeture de la vanne.

## Claims

1. Apparatus designed to transmit movements between two members (46, 34) capable of being actuated by low amplitude back-and-forth movements in two non-aligned coplanar directions, said apparatus comprising:
- a fixed body (10),
- a movable lever (30) linking the two members (46, 34),
- a flexible strip (32) placed between the lever (30) and the fixed body (10) that, in the unflexed state, lies in a plane perpendicular to the plane containing the said directions and passing through a longitudinal axis of the lever.

2. Apparatus of claim 1, wherein the flexible strip (32) connects the lever (30) to sections of the fixed body (10) located on either side of the lever.

3. Apparatus of claim 2, wherein the flexible strip (32) is mounted in a tubular section (22) of the fixed body (10) and fastened at two diametrically opposed points, and when the strip is unflexed the lever passes through the axis of the tubular section.

4. Apparatus according to any one of the preceding claims, wherein the flexible strip (32) is fastened to the lever (30) and to the fixed body (10).

5. Valve comprising:
- a fixed body (10) containing at least one valve seat (18),
- at least one movable lever (30) whose central section is mounted onto the fixed body (10) by means of a flat, flexible strip (32) that, in its unflexed state, passes through a longitudinal axis of the lever,
- a linear actuator (42) fitted with a control member (46) that operates in conjunction with a first end of the lever (30) and is capable of being actuated by low amplitude back-and-forth movements in a direction lying in a plane perpendicular to the plane of the flexible strip (32),
- a sealing flap (34) mounted on a second end of the lever such that it presses on the valve seat (18) when the flexible strip (32) is in the unflexed state.

6. Valve of claim 5, wherein the flexible strip (32) connects the lever (30) to sections of the fixed body (10) located on either side of the lever.

7. Valve of claim 6, wherein the flexible strip (32) is mounted in a tubular section (22) of the fixed body (10) and fastened at two diametrically opposed points and in this configuration, when the strip is unflexed the lever (30) passes through the axis of the tubular section.

8. Valve of claim 7, wherein the second end of the lever (30) is located in a chamber (12) formed inside the fixed body (10) and partially delimited by a leaktight bellows (38) fitted between the lever (30) and said tubular section (22) of the fixed body (10).

9. Valve of claim 8, wherein fluid inlet and outlet passages (14, 16) are formed in the fixed body (10) and give into said chamber (120 directly and via the valve seat (18) respectively.

10. Valve according to any one of the claims 5 to 9, wherein the flexible strip (32) is fastened to the lever (30) and to the fixed body (10).

11. Valve according to any one of the claims 5 to 9, wherein the control member (46) includes a pusher (48) and elastic means (54) operating in opposition on the first end of the lever (13) such that the elastic means (54) maintain the sealing flap (34) pressed against the valve seat (18) and such that the pusher (48) is separated from the first end of the lever (30) by a clearance when the linear actuator (42) occupies a closed state of the valve.

## Patentansprüche

1. Vorrichtung zum Übertragen von Bewegungen zwischen zwei Elementen (46,34), die Hin- und Herbewegungen geringer Amplitude in zwei koplanaren, nicht gleich ausgerichteten Richtungen auszuführen vermögen, wobei die Vorrichtung umfasst:
- einen feststehenden Körper (10),
- einen beweglichen Hebel (30), der die beiden Elemente (46,34) verbindet,
- eine flexible Lamelle (32), die zwischen den Hebel (30) und den feststehenden Körper (10) eingefügt ist und in einem unbelasteten bzw. nicht gespannten Zustand in einer Ebene senkrecht zu der die Richtungen enthaltenden und durch eine Längsachse des Hebels hindurchgehenden Ebene gelegen ist.

2. Vorrichtung nach Anspruch 1, wobei die flexible Lamelle (32) den Hebel (30) mit Abschnitten des feststehenden Körpers (10), die auf beiden Seiten des Hebels gelegen sind, verbindet.

3. Vorrichtung nach Anspruch 2, wobei die flexible Lamelle (32) in einem rohrförmigen Abschnitt (22) des feststehenden Körpers gemäß zwei diametral entgegengesetzten Mantellinien angebracht ist und der Hebel (30) diesen rohrförmigen Abschnitt längs seiner Achse durchquert, wenn sich die Lamelle in ihrem unbelasteten bzw. nicht gespannten Zustand befindet.

4. Vorrichtung nach einem der vorangehenden Ansprüche, wobei die flexible Lamelle (32) am Hebel (30) und am feststehenden Körper (10) befestigt ist.

5. Ventil mit:
- einem feststehenden Körper (10), in dem mindestens ein Ventilsitz (18) ausgebildet ist,
- mindestens einem beweglichen Hebel (30), von dem ein zentraler Teil an dem feststehenden Körper (10) über eine flexible Lamelle (32), die eine plane Form aufweist und durch eine Längsachse des Hebels hindurchgeht, in einem nicht gespannten Zustand angebracht ist,
- einem Linear-Aktuator (42), der mit einem Steuerelement (46) versehen ist, welches mit einem ersten Ende des Hebels (30) zusammenwirkt und eine Hin- und Herbewegung geringer Amplitude in einer in einer zur Ebene der flexiblen Lamelle (32) senkrechten Ebene gelegenen Richtung ausführen kann,
- einer Ventilklappe (34), die an einem zweiten Ende des Hebels derart angebracht ist, dass sie am Sitz (18) aufliegt, wenn sich die flexible Lamelle (32) in ihrem unbelasteten bzw. nicht gespannten Zustand befindet.

6. Ventil nach Anspruch 5, wobei die flexible Lamelle (32) den Hebel (30) mit Teilen des feststehenden Körpers (10), die auf beiden Seiten des Hebels gelegen sind, verbindet.

7. Ventil nach Anspruch 6, wobei die flexible Lamelle (32) in einem rohrförmigen Abschnitt (22) des feststehenden Körpers (10) gemäß zwei diametral entgegengesetzten Mantellinien angebracht ist, und wobei der Hebel (30) diesen rohrförmigen Abschnitt längs seiner Achse durchquert, wenn sich die Lamelle in ihrem unbelasteten bzw. nicht gespannten Zustand befindet.

8. Ventil nach Anspruch 7, wobei- das zweite Ende des Hebels (30) in einer Kammer (12) gelegen ist, die im Innern des feststehenden Körpers (10) ausgebildet ist und teilweise von einem zwischen dem Hebel (30) und dem rohrförmigen Abschnitt (22) des feststehenden Körpers (10) eingefügten Faltenbalg (38) begrenzt ist.

9. Ventil nach Anspruch 8, wobei Durchgänge (14, 16) zum Einlass und zum Auslass von Fluid in dem feststehenden Körper (10) ausgebildet sind und jeweils direkt bzw. über den Sitz (18) in die Kammer (12) münden.

10. Ventil nach einem der Ansprüche 5 bis 9, wobei die flexible Lamelle (32) am Hebel (30) und am feststehenden Körper (10) befestigt ist.

11. Ventil nach einem der Ansprüche 5 bis 10, wobei das Steuerelement (46) einen Stößel (48) sowie elastische Mittel (54) aufweist, welche entgegengesetzt auf das erste Ende des Hebels (30) derart einwirken, dass die elastischen Mittel (54) die Ventilklappe (34) auf dem Sitz (18) in Auflage halten, und dass der Stößel (48) vom ersten Ende des Hebels (30) durch ein funktionelles Spiel getrennt ist, wenn der Linear-Aktüator (42) einen Schließzustand des Ventils einnimmt.
